## Europäisches Patentamt
## European Patent Office
## Office européen des brevets

(19)

(11) Veröffentlichungsnummer: **0 027 264**
**B1**

(12) **EUROPÄISCHE PATENTSCHRIFT**

(45) Veröffentlichungstag der Patentschrift:
13.04.83

(51) Int. Cl.³: **C 04 B 43/00,** F 16 L 59/04

(21) Anmeldenummer: 80106147.4

(22) Anmeldetag: 10.10.80

(54) Wärmeisolierkörper sowie Verfahren zu seiner Herstellung.

(30) Priorität: 13.10.79 DE 2941606
18.10.79 DE 2942087

(43) Veröffentlichungstag der Anmeldung:
22.04.81 Patentblatt 81/16

(45) Bekanntmachung des Hinweises auf die Patenterteilung:
13.04.83 Patentblatt 83/15

(84) Benannte Vertragsstaaten:
AT BE CH FR GB IT LI NL SE

(56) Entgegenhaltungen:
**CH-A-602 846**
**DE-A-2 521 361**
**DE-A-2 748 307**
**US-A-3 055 831**

(73) Patentinhaber: **Grünzweig + Hartmann und Glasfaser AG, Bürgermeister-Grünzweig-Strasse 1-47,
D-6700 Ludwigshafen am Rhein (DE)**

(72) Erfinder: **Kummermehr, Hans, Prinzregentenstrasse 25a,
D-6700 Ludwigshafen (DE)**

(74) Vertreter: **KUHNEN & WACKER Patentanwaltsbüro,
Schneggstrasse 3-5 Postfach 1729, D-8050 Freising (DE)**

BUNDESDRUCKEREI BERLIN

## Wärmeisolierkörper sowie Verfahren zu seiner Herstellung

Die Erfindung betrifft einen Wärmeisolierkörper aus einem teilchenförmigen Isoliermaterial, dem ggf. Mineralfaserwolle und Trübungsmittel zugesetzt sind, und der durch ein Bindemittel gehärtet ist.

Gattungsgemäße Wärmeisolierkörper weisen im allgemeinen nach dem Verdichten des Isoliermaterials eine wenig stabile Form auf, da der Zusammenhalt dieses Wärmeisolierkörpers in erster Linie auf der Verzahnung und der Umklammerung der feindispersen Partikel beruht. Für die normale Handhabung, bei der durch unsachgemäßes Bearbeiten häufig große Schub- und Scherspannungen auftreten, sind derart hergestellte Platten häufig ungeeignet und gehen leicht zu Bruch.

Um ein Brechen dieser Platten bei zu hoher Beanspruchung zu verhindern, sind aus der DE-C-1 954 992 Wärmedämmplatten bekannt, bei denen die Materialteilchen oder Fasern in einer Umhüllung verdichtet vorgesehen sind. Das verdichtete Material übt dabei auf die gesamte Innenfläche der flexiblen Umschließung, die in der Regel die Form eines Sackes besitzt und aus einem Stoff aus Glas- oder Quarzfasern besteht, einen Druck aus. Dieser Innendruck wirkt von außen einwirkenden Drücken, die auf Schub- oder Scherspannungen zurückzuführen sind, entgegen und verhindert somit ein Brechen des in der Umschließung eingeschlossenen Isolierkörpers.

Aus der DE-C-2 036 124 sind Wärmedämmplatten bekannt, bei denen sich das hochdisperse, ebenfalls in einem Sack eingeschlossene Isoliermaterial bei der Druckverfestigung derart mit der Umhüllung verklammert, daß ein Sandwich aus Kernmaterial und Umhüllung entsteht. Dieses Isolationsprodukt zeichnet sich durch eine hohe Biegesteifigkeit aus, was bei einer zu hohen Biege- oder Scherbeanspruchung zum Bruch der Platte führt.

Ein anderer Weg wird gemäß US-A-3 055 831 vorgeschlagen, aus der handhabungsfähige Wärmeisolierplatten bekannt sind. Diese Platten bestehen aus hochdispersem Isoliermaterial, welches mit Mineralfaserwolle und Trübungsmittel in hochfeiner Form vermischt ist. Dieser Mischung wird ein Bindemittel unter Vermischung zugesetzt, das anschließend durch Wärme oder durch katalytische Reaktion ausgehärtet wird. Die Partikel des Bindemittels müssen dabei eine ähnliche Korngröße wie die Teilchen des Isoliermittels besitzen, so daß deren Korngröße unterhalb 0,1 µm liegt. Um diese Korngröße zu erreichen, wird das Bindemittel in speziellen Mühlen, beispielsweise Schwing- oder Kugelmühlen, auf diese Korngröße gemahlen und anschließend in das Isoliermittelgemisch mit Hilfe einer Mischvorrichtung eingearbeitet. Dieses Mischen ist jedoch mit erheblichen Schwierigkeiten behaftet, da sowohl die feinkörnigen Bindemittelteilchen als auch die Isoliermittelteilchen sich sofort beim Mischen zu Sekundär Agglomeraten zusammenballen und somit eine wirksame Vermischung von Bindemittel und Isoliermaterial verhindert wird. Dadurch kommt es zu einer uneinheitlich verteilten Bindemittel-Isoliermaterial-Mischung, was die mechanischen Eigenschaften der fertigen Platte nachteilig beeinflußt. Da nur bestimmte Isoliermaterialverbände durch das Bindemittel-Agglomerat zusammengehalten werden, neigt das beim Härten entstandene Produkt bei Beanspruchung zu brechen, so daß auch hier die angestrebten Eigenschaften nur bedingt erreicht werden.

Aus der DE-A1-2 748 307 ist eine Wärmedämmplatte bekannt, die im Kern aus einem Gemisch von pyrogener Kieselsäure, Trübungsmitteln und zugegebenen Mineralfasern besteht und als Umhüllung dieses Kerns eine Schicht aus Mineralfasern mit Füllstoffen und anorganischem Bindemittel besitzt. Die relativ grobkörnigen Füllstoffe der äußeren Schicht werden mit Wasserglas als Bindemittel ausgehärtet, was zusätzlich zu einem Verzahnen und teilweisen Anlösen der in der zweiten Schicht enthaltenen Kieselsäure führt und somit eine weitere innige Verbindung der beiden Schichten ergibt. Diese Art der Bindemittelbehandlung führt jedoch nur zu einem beschränkten Schutz des Kerns der Wärmedämmplatte, da die relativ grobe Deckschicht auch im ausgehärteten Zustand nicht besonders abriebbeständig ist und somit die mechanischen Festigkeiten der Platte durch die Aushärtung nicht im erwarteten Maße gesteigert wurden.

Die CH-A5-602 846 beschreibt Kunstharzmassen, die als Beschichtungsmörtel, Vergußmasse oder dgl. eingesetzt werden sollen. Hierdurch soll die Verarbeitbarkeit derartiger Mörtel, insbesondere die Kellenverlegbarkeit verbessert werden. Eine Kreuzvernetzung im Bereich der dort befindlichen Mikrofüllstoffe soll jedoch offensichtlich nicht stattfinden.

Weiterhin ist aus der DE-A2-2 521 361 ein Mattierungsmittel für Lacke bekannt, bei dem zwar Kieselsäure und Kieselsäuregel eingesetzt werden sollen, was jedoch nur als Fällungskieselsäure in Form eines Kieselsäurehydrogels geschehen soll. Insofern wird weder ein Wärmeisolierkörper noch dessen spezielle Verfestigung vorgeschlagen.

Der Erfindung liegt die Aufgabe zugrunde, einen Wärmeisolierkörper der eingangs erwähnten Art zu schaffen, der neben ausgezeichneten Wärmedämmwerten auch verbesserte mechanische Eigenschaften, insbesondere eine hohe Widerstandsfähigkeit gegen Bruch, sowie Schub- und Scherspannungen aufweist.

Diese Aufgabe wird erfindungsgemäß dadurch gelöst, daß das in einem Vorgemisch mit einem Dispergiermittel gleichförmig verteilte Bindemittel in dem Isoliermaterial feindispers verteilt vorgesehen ist, wobei die Kanten und Ecken des Isoliermaterials durch eine Wärmebehandlung in Gegenwart des Bindemittels kreuzvernetzt sind.

Mit einem derartigen Wärmeisolierkörper werden vorteilhaft die wärmedämmenden und mechanischen Eigenschaften vereinigt, d. h. die erfindungsgemäßen Wärmeisolierkörper besitzen neben einer ausgezeichneten Wärmedämmeigenschaft einen sehr hohen Widerstand gegen Bruch und sind gegen Schub- und Scherspannungen in einem ausreichenden Maß widerstandsfähig.

Durch die Verwendung eines Bindemittels erübrigt sich der Einsatz einer Umhüllung für das Isoliermaterial, so daß durch den Wegfall der Umhüllung erhebliche Material- und Personalkosten eingespart werden können. Außerdem entfällt die Inhomogenität der Kernschicht, die auf ein Verkrallen des Isoliermaterials mit dem Gewebe der Umhüllung zurückzuführen ist, so daß dadurch insgesamt die Qualität des Produktes steigt.

Die Vorzüge des erfindungsgemäßen Wärmeisolierkörpers sind darauf zurückzuführen, daß die feingemahlenen Bindemittelteilchen mit einem Dispergiermittel zu einem Vorgemisch vermischt werden, wobei ein Zusammenkleben der Bindemittelteilchen durch den Dispergiermittelzusatz wirksam verhindert wird. Das erhaltene gleichförmig mit dem Bindemittel versetzte Vorgemisch wird anschließend dem Isoliermaterial untergemischt, wobei eine äußerst feine Verteilung des Bindemittels in dem Isoliermaterial erhalten wird. Beim Aushärten können die Bindemittelteilchen mit den benachbarten Isoliermaterialteilchen an deren Kanten und Ecken in Wechselwirkung treten und mit diesen dreidimensional verknüpfte Gitter bilden, die eine hohe Stabilität des erhaltenen Produkts gegen mechanische Einflüsse gewährleisten.

Als Bindemittel können sämtliche anorganische oder organische Bindemittel eingesetzt werden, die durch Mahlen in eine Korngröße unter 1 µm überführt werden können und unterhalb 700°C erweichen bzw. schmelzen, wodurch sie eine Verbindung mit den umgebenden Isoliermaterialteilchen eingehen können. Das Vermahlen dieser Bindemittelteilchen auf eine Korngröße im Bereich von 1 µm oder darunter läßt Bindemittelteilchen entstehen, die bei einer gleichförmigen Verteilung im Isolierkörper eine hohe mechanische Beständigkeit erzeugen. Die obere Temperaturgrenze von ca. 700°C ist deshalb zu beachten, weil oberhalb dieser Temperaturgrenze die Isoliermaterialteilchen zu sintern beginnen und dadurch die wärmedämmende Eigenschaft des Isolierkörpers verloren geht.

Zu Bindemitteln auf anorganischer Basis gehören niederschmelzende Gläser, glasbildende Stoffe, Glaslote, Phosphate, Sulfate, Carbonate, Hydroxide oder Oxide der Alkali- oder Erdalkalimetalle, Natriumsilikate, Borate, Borax, Natriumperborat und deren Gemische. Vorzugsweise wird Soda oder Natriumsulfat eingesetzt, wobei diesem Natriumsulfat zur Reduzierung etwas feinkörniger Ruß beigegeben ist.

Beispiele für Bindemittel auf organischer Basis sind Harze vom Phenol-Formaldehyd-Typ, Harnstoff-Formaldehyd-Typ, thermisch erweichbare Harze, wie PVC-Harze oder Kopolymere von Vinylchlorid und Vinylacetat, Granulate von Polyurethan, Polyamiden, Polyäthylen, Siliconharze und dgl. Vorzugsweise werden feinst gemahlene Formaldehydharze oder Methylsiliconharze eingesetzt.

Im allgemeinen wird die Menge des eingesetzten Bindemittels an Hand der gewünschten Steifigkeit und Biegefähigkeit der Platte bestimmt, wobei es regelmäßig ausreicht, wenn die Platte durch den Zusatz des Bindemittels abriebfest wird. Üblicherweise wird das Bindemittel deshalb in einer Menge von 2—30 Gewichtsprozent, insbesondere 10 Gewichtsprozent, bezogen auf das Isoliermittel eingesetzt.

Um das Bindemittel möglichst einheitlich und ohne Zusammensetzen in Form eines Agglomerats im Isoliermaterial zu verteilen, wird es vor dem Einverleiben in das Isoliermaterial mit einem Dispergiermittel innig vermischt und anschließend auf eine Korngröße von 1 µm oder darunter gemahlen. Andererseits kann auch das bereits fein gemahlene Bindemittel durch Mischen mit dem Dispergiermittel derart fein verteilt werden, daß eine Agglomeratbildung nicht mehr festgestellt werden kann.

Als Dispergiermittel können hydrophobierte Substanzen anorganischer oder organischer Art eingesetzt werden, beispielsweise hydrophobierte und/oder pyrogene Kieselsäure oder Polymerisate wie Polytetrafluoräthylen, wobei jedoch die hydrophobierte Kieselsäure aus Kostengründen bevorzugt ist.

Dieses Dispergiermittel, dessen Korngröße selbst unter 1 µm liegt, wird mit dem feinkörnigen Bindemittel in einer Menge von 0,5—20, vorzugsweise 5—10 Gewichtsprozent unter Bildung eines Vorgemisches innig vermischt. Dieses Vorgemisch wird mit den anderen Bestandteilen des Wärmeisolierkörpers so lange in einem Mischer vermengt, bis eine gleichförmige und äußerst feine Verteilung dieser Bestandteile gewährleistet ist. Das Dispergiermittel dient hierbei als Abstandshalter zu den übrigen Bestandteilen des Wärmeisolierkörpers, so daß die einzelnen Bindemittelteilchen ohne Agglomerieren gleichförmig verteilt in der Isoliermasse vorliegen. Somit dient also das Dispergiermittel nicht nur als Mahlhilfe für das Bindemittel, sondern auch als Abstandshalter zu den einzelnen Isoliermittelteilchen.

Als teilchenförmiges Isoliermaterial können Pulver- oder Faserteilchen oder deren Gemische in Frage kommen. Dabei kann es sich um Agglomerate von fein verteilten Teilchen mit einer Korngröße unter 0,1 µm handeln, die eine röhrenförmige oder poröse Struktur besitzen. Zu derartigen Isolierstoffen gehören Quarz- oder Glasfasern, Aluminiumsilikatfasern sowie weitere keramische Fasern, pulverförmiges Aluminium oder Gemische aus Flugasche mit expandierter Kieselerde, feinteiliges Aluminium- oder Chromoxid und Aerogele, beispielsweise von Kieselsäure, Chromoxid, Thoriumoxid, Magnesiumhydrat, Aluminiumoxid oder deren Gemische. Diese Aerogele können erfindungsgemäß nicht nur als Isoliermaterial, sondern auch als Dispergiermittel eingesetzt werden, sofern sie hydrophobiert sind.

Weiterhin gehört zu derartigen Isolierstoffen die pyrogene Kieselsäure, die aus der chemischen Zersetzung von Siliciumtetrachlorid entsteht. Die Größe dieser Teilchen liegt in einem Bereich von 10 Å – 2 mm, insbesondere unterhalb 1 µm. Im allgemeinen besteht der Wärmeisolierkörper bis zu 95% Gew. aus diesem Isoliermaterial, wobei bevorzugt 30 bis 85% Gew. Isoliermaterial eingesetzt werden.

Zur Erhöhung des Wärmereflexionsvermögens wird den Gemischen weiterhin ein Trübungsmittel zugegeben, das ebenfalls in fein verteilter Form, üblicherweise mit einer Korngröße von 2 – 3 µm vorliegt. Zu einsetzbaren Trübungsmitteln gehören Graphit und Ruß, sofern die Temperatur nicht zu hoch ist, anorganische Oxide von Titan (Ilmenit), Rutil, Chromoxid, Manganoxid, Eisenoxid sowie Carbide des Siliciums, Bors, Tantals oder Wolfram oder deren Gemische. Weiterhin lassen sich metallisches Aluminium, Wolfram oder Silicium, Zirkon, Titandioxid oder Bleimonoxid sowie weitere Stoffe einsetzen, die einen hohen Wärmereflexions- oder IR-Refraktionsindex besitzen. Diese Trübungsmittel können bis zu einer Menge von 60 Gew.-% in dem Wärmeisolierkörper vorliegen.

Dem zu verpressenden Gemisch können weiterhin verstärkend wirkende Fasern, beispielsweise Alumosilikatfasern oder Glasfasern zugesetzt werden, die üblicherweise einen Durchmesser von ca. 5 – 10 µm besitzen und einige Millimeter lang sind. Diese Verstärkungsfasern können bis zu einer Menge von 40 Gew.-% dem Gemisch zugesetzt werden.

Zur Herstellung des erfindungsgemäßen Wärmeisolierkörpers wird zunächst das Vorgemisch, bestehend aus dem Bindemittel und dem Dispergiermittel hergestellt. Man verwendet 0,5 bis 20, insbesondere 5 – 10 Gew.-% Dispergiermittel und die entsprechende Menge Bindemittel. Dieses Gemisch, das beispielsweise 10% hydrophobierte Kieselsäure und 90% Soda enthält, wird in einer Mühle, beispielsweise einer Scheibenschwingmühle auf eine Korngröße unter 1 µm gemahlen und anschließend mit einer vorbestimmten Mischung aus Isoliermaterial, Trübungsmittel und Verstärkungsfaser vermengt. Dabei liegt das Vorgemisch im Endgemisch in eine Menge von 2 – 30, vorzugsweise 10 Gew.-% vor. Ein derartiges Endgemisch kann beispielsweise aus ca. 60% pyrogener Kieselsäure, 25% Ilmenit, 5% Al-Si-Faser und 10% Vorgemisch in Form von Soda und hydrophobierter Kieselsäure bestehen.

Nach dem Mischen in einem Mischer, in dem eine gleichmäßige Verteilung der Komponenten erfolgt, wird die Mischung in einer Presse zu Platten oder zu Formteilen verpreßt und anschließend einer Wärmebehandlung unterzogen. Das teilchenförmige Material wird dabei einer mechanischen Druckbelastung ausgesetzt. Der Druck liegt im allgemeinen zwischen 0,07 und 21 kg/cm² oder auch darüber, wobei vorteilhaft zwischen der Presse und dem Isoliermaterial ein Trennmittel vorgesehen ist.

Die derart hergestellte Platte oder Form wird nunmehr einer Wärmebehandlung entweder in einem Ofen oder aber in einer HF- oder Mikrowellenapparatur ausgesetzt.

In dem Wärmeofen soll die Temperatur nicht über 700° C steigen, da oberhalb dieser Temperatur des Sintern der Isolierteilchen beginnt. Üblicherweise wird in einem Temperaturbereich von 500 – 600° C gearbeitet, bei denen die glasbildenden Stoffe, beispielsweise das Soda mit dem teilchenförmigen Isoliermaterial, beispielsweise pyrogener Kieselsäure, zu einem Silikat verschmilzt, so daß die einzelnen Kanten und Ecken des Isoliermaterials unter Bildung eines Raumnetzes miteinander verbunden werden. Es hat sich gezeigt, daß bei einer Temperatureinwirkung von 600° C eine Verweildauer der Platte von 20 Minuten im Wärmeofen ausreicht, wenn die Platte eine Stärke von 20 mm besitzt. Es wird dabei eine abriebfestere und gut verarbeitbare Platte erhalten. Sofern Platten mit einem Durchmesser von 40 mm verarbeitet werden sollen, muß die Verweildauer entsprechend, beispielsweise auf 30 Minuten, gesteigert werden.

Andererseits wird die Temperatur im Wärmeofen auf höchstens 300° C angehoben, sofern organische Polymere zur Vernetzung der Platte eingesetzt werden. Derartige Polymere zersetzen sich oberhalb 200 – 300° C und erfüllen damit nicht mehr ihren Zweck. Sofern Isolierplatten mit einer maximalen Temperaturbelastbarkeit von 200° C hergestellt werden sollen, ist die Verwendung eines derartigen Polymerisats ausreichend.

Andererseits kann der Aufbau des Netzstrukturwerkes auch dadurch erfolgen, daß Substanzen mit einer hohen Absorptionsfähigkeit im Mikrowellenbereich eingesetzt werden, wobei Substanzen mit einem hohen Verlustwinkel gewählt werden. Hierzu eignen sich insbesondere wasserenthaltende Verbindungen, beispielsweise Wasserglas, oder Phenolharze. Die in dem Isoliermaterial verteilten Bindemittel vom Wasserglas- oder Phenolharztyp werden mit einer HF- oder Mikrowellenapparatur selektiv auf Temperaturen von 1000° C und darüber erhitzt, wobei es zu Verschmelzungen von Isolierteilchen im Bereich dieser Bindemittelteilchen kommt. Dabei ist es gleichgültig, ob das Bindemittelteilchen selbst in die Reaktion unter Bildung einer Kette mit eingeht (Wasserglas) oder aber zerstört wird (Phenolharz), was auf eine katalytische Härtung hinausläuft. Hierzu sei angemerkt, daß beispielsweise Phenolharz enthaltender Mineralfaserschrott nach dessen Zerkleinerung in einer Kugelmühle auf eine Größe von einigen μm vermahlen und anschließend als Bindemittel dem Gemisch einverleibt werden kann. Da derartige Fasern bis zu 15% Phenolharz enthalten, kann entsprechend weniger Bindemittel eingesetzt werden. In bestimmten Fällen reicht sogar die an den Mineralfaserteilchen haftende Phenolharzmenge aus, um für eine ausreichende Verfestigung des Wärmeisolierkörpers zu sorgen.

In einer weiteren bevorzugten Ausführungsform werden Siliconharze, insbesondere Methylsiliconharze eingesetzt, die sich bei einer Temperatur von 500 – 600° C unter Bildung einer $SiO_2$-Brücke zersetzen, wobei ebenfalls ein Raumnetz mit den angrenzenden Isoliermaterialteilchen gebildet wird. Festzuhalten ist also, daß niederschmelzende Glasbildner nach einer Wärmebehandlung als Brückenglieder zwischen den Isoliermaterialteilchen vorliegen, während organische Polymere, wie die bereits im ausgehärteten Zustand eingesetzten Formaldehydharze, nach einer Hochtemperaturbehandlung in einem Mikrowellenherd ausgebrannt sind und somit nur eine katalytische Vernetzungsreaktion in Gang zu bringen hatten.

In der Zeichnung sind Ausführungsbeispiele für den erfindungsgemäßen Wärmeisolierkörper wiedergegeben. Es zeigt

Fig. 1 eine einschichtige Isolierplatte, wobei im vergrößerten Ausschnitt die Raumnetzstruktur wiedergegeben ist, und

Fig. 2 eine dreischichtige Isolierplatte.

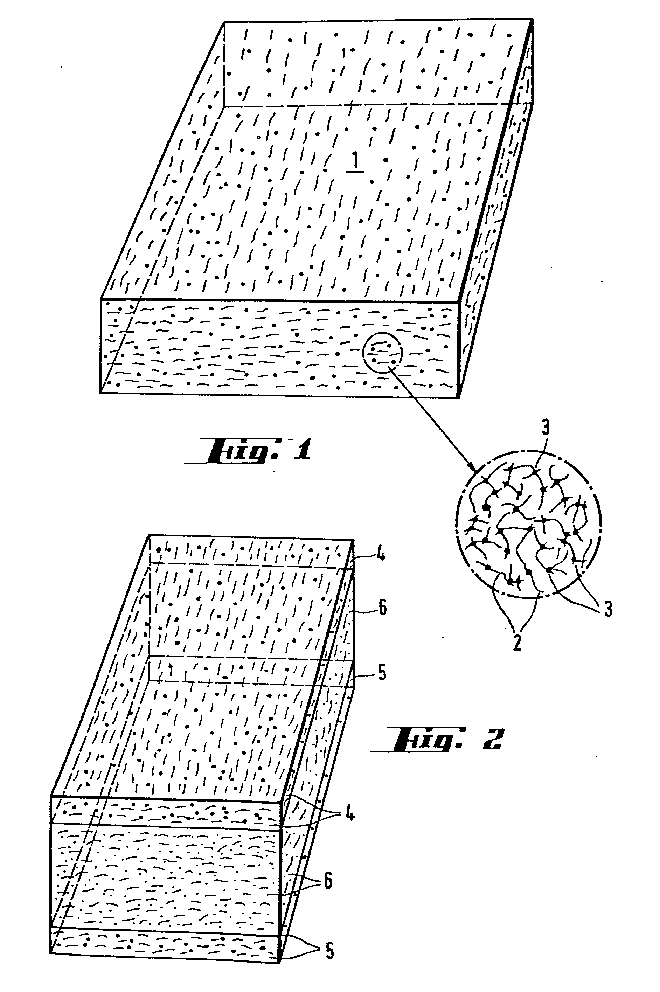

In Fig. 1 ist mit 1 die Isolierplatte gezeigt, die nach dem Pressen und Erhitzen diese Gestalt angenommen hat. Sie setzt sich aus dem feinteiligen Isoliermittel, Trübungsmittel, Mineralfaserwolle und Bindemittel zusammen.

In dem in Fig. 1 gezeigten vergrößerten Ausschnitt sind aus Gründen der Übersichtlichkeit lediglich die Isoliermaterialteilchen 2 und die punktförmig dargestellten Bindemittelteilchen 3 zu sehen. Aus diesem Ausschnitt kann entnommen werden, daß die Bindemittelteilchen 3 mit den Isoliermittelteilchen 2 kreuzförmig in sämtlichen Raumrichtungen vernetzt sind und somit ein stabiles Gerüst im Inneren ergeben.

Gemäß der Ausführungsform nach Fig. 2 besteht der Wärmeisolierkörper aus 3 Schichten, nämlich den Deckschichten 4 und 5, die ein Bindemittel enthalten und der Kernschicht 6, die kein Bindemittel enthält. Die Zusammensetzung von Deckschicht und Kernschicht entsprechen sich also bis auf den Zusatz des Bindemittels. Eine derartige Isolierplatte wird dadurch hergestellt, daß man zunächst in eine Preßform eine Schicht Material mit Bindemittel, anschließend eine Schicht Material ohne Bindemittel und zum Schluß wiederum eine Schicht Material mit Bindemittel einbringt und anschließend die Presse betätigt. Anschließend wird durch Wärmebehandlung gehärtet. Die Innenschicht weist die gleichen Eigenschaften wie eine übliche, ohne Bindemittel hergestellte Isolierplatte auf,

ist jedoch durch die beiden Deckschichten wesentlich stabiler und abriebbeständiger.

Eine derartige dreischichtige Isolierplatte eignet sich insbesondere für eine hohe Temperaturbelastung, sofern die Deckschichten 4 und 5 mit hochtemperaturbeständigen Materialien, wie Aluminiumoxid oder Zirkonoxyd, angereichert sind. Dadurch wird ein Temperaturgefälle von der Außenseite der Deckschicht zur Kernschicht hin derart erzeugt, daß die letztere auch bei hoher Temperaturbelastung nicht zerstört wird. Andererseits können jedoch auch sämtliche drei Schichten mit Bindemittel ausgestattet sein, wobei jedoch die Deckschichten 4 und 5 in ihrer Zusammensetzung den späteren Einsatzgebieten angepaßt werden können. Beispielsweise können Füllstoffe für die Deckschicht Aluminiumoxid, Sand, gemahlene Schamotte, Kaolin und Perlit brauchbar sein. Es können jedoch auch Fasern, wie Asbest, Steinwolle oder vorzugsweise Aluminium-Silikat-Fasern verwendet werden. Diesen Deckschichten können Pigmente zugesetzt werden, die die Temperatur mit Sicherheit unter 900° C halten, wobei die vorstehend genannten Trübungsmittel verwendet werden.

**Patentansprüche**

1. Wärmeisolierkörper aus einem teilchenförmigen Isoliermaterial, dem ggf. Mineralfaserwolle und Trübungsmittel zugesetzt sind, und der durch ein Bindemittel gehärtet ist, dadurch gekennzeichnet, daß das in einem Vorgemisch mit einem Dispergiermittel gleichförmig verteilte Bindemittel in dem Isoliermaterial feindispers vorgesehen ist, wobei die Kanten und Ecken des Isoliermaterial durch eine Wärmebehandlung in Gegenwart des Bindemittels kreuzvernetzt sind.

2. Körper nach Anspruch 1, dadurch gekennzeichnet, daß als Bindemittel organische und/oder anorganische Substanzen eingesetzt werden.

3. Körper nach Anspruch 2, dadurch gekennzeichnet, daß als anorganische Bindemittel niederschmelzende Gläser; Glaslote; Phosphate, Sulfate, Carbonate, Hydroxide oder Oxide der Alkali- oder Erdalkalimetalle; Natriumsilikate, Borate, Borax oder Natriumperborat eingesetzt werden.

4. Körper nach Anspruch 3, dadurch gekennzeichnet, daß als anorganisches Bindemittel Soda oder Natriumsulfat eingesetzt werden.

5. Körper nach Anspruch 2, dadurch gekennzeichnet, daß als organische Bindemittel thermisch härtbare Harze, wie Phenol-Formaldehydharze, Harnstoff-Formaldehydharze, Polyvinylchlorid, Kopolymere von Vinylchlorid und Vinylacetat oder Silicone eingesetzt werden.

6. Körper nach Anspruch 5, dadurch gekennzeichnet, daß als organische Bindemittel Formaldehydharz oder Methylsiliconharze eingesetzt werden.

7. Körper nach Anspruch 1, dadurch gekennzeichnet, daß als Dispergiermittel Polytetrafluoräthylen, hydrophobierte und/oder pyrogene Kieselsäure eingesetzt werden.

8. Körper nach einem oder mehreren der vorhergehenden Ansprüche 1—7, dadurch gekennzeichnet, daß die Korngröße der Bindemittelteilchen, Dispergiermittelteilchen und/oder Isoliermittelteilchen unter 1 µm liegt.

9. Körper nach einem oder mehreren der vorhergehenden Ansprüche 1—7, dadurch gekennzeichnet, daß die Korngröße der Trübungsmittelteilchen 2—3 µm beträgt.

10. Körper nach einem oder mehreren der vorhergehenden Ansprüche 1—9, dadurch gekennzeichnet, daß das Verhältnis von Bindemittel/Isoliermaterial in einem Bereich von 2 : 98—30 : 70, insbesondere 10 : 90 liegt.

11. Körper nach einem oder mehreren der vorhergehenden Ansprüche 1—9, dadurch gekennzeichnet, daß der Anteil des Dispergiermittels im Bindemittel in einem Bereich von 0,5 : 20, insbesondere 5—10 Gew.-% liegt.

12. Verfahren zur Herstellung des Wärmeisolierkörpers nach Anspruch 1, dadurch gekennzeichnet, daß man ein Bindemittel mit einem Dispergiermittel vermischt, das erhaltene Vorgemisch mit dem Isoliermaterial und ggfs. der Mineralfaserwolle sowie dem Trübungsmittel vermengt und das erhaltene Gemisch verpreßt und anschließend aushärtet.

13. Verfahren nach Anspruch 12, dadurch gekennzeichnet, daß man Soda oder Natriumsulfat als Bindemittel einsetzt.

14. Verfahren nach Anspruch 12 oder 13, dadurch gekennzeichnet, daß man hydrophobierte Kieselsäure als Dispergiermittel einsetzt.

15. Verfahren nach einem der vorhergehenden Ansprüche 12 bis 14, dadurch gekennzeichnet, daß der Anteil des Dispergiermittels im Bindemittel 0,5—20, vorzugsweise 5—10 Gew.-% beträgt.

16. Verfahren nach einem oder mehreren der vorhergehenden Ansprüche 12—15, dadurch gekennzeichnet, daß die Korngröße des Dispergiermittelteilchens, Bindemittelteilchens und/oder Isoliermittelteilchens unter 1 µm liegt.

17. Verfahren nach einem oder mehreren der vorhergehenden Ansprüche 12—15, dadurch gekennzeichnet, daß die Korngröße des Trübungsmittelteilchens 2—3 µm beträgt.

18. Verfahren nach einem oder mehreren der vorhergehenden Ansprüche 12 bis 17, dadurch gekennzeichnet, daß das Verhältnis Bindemittel/Isoliermittel in einem Bereich von 2 : 98—30 : 70, vorzugsweise 10 : 90 liegt.

19. Verfahren nach einem oder mehreren der vorhergehenden Ansprüche 12 bis 18, dadurch gekennzeichnet, daß man das gepreßte Gemisch in einem Ofen bei Temperaturen von 500—700° C aushärtet.

20. Verfahren nach einem der vorhergehenden Ansprüche 12 bis 18, dadurch gekennzeichnet, daß man das gepreßte Gemisch in einem HF- oder Mikrowellenherd aushärtet.

21. Verfahren nach einem oder mehreren der vorhergehenden Ansprüche 12 bis 20, dadurch gekennzeichnet, daß man auf eine aus Isoliermaterial und ggfs. Mineralfaserwolle und Trübungsmittel bestehende Kernschicht jeweils eine obere und untere Bindemittel enthaltende Deckschicht aufbringt, diese Schichten durch Pressen verfestigt und anschließend einer Wärmebehandlung unterwirft.

22. Verfahren nach einem oder mehreren der vorhergehenden Ansprüche 12 bis 21, dadurch gekennzeichnet, daß man kleingemahlene, mit ausgehärtetem Bindemittel versehene Mineralfasern einsetzt.

## Claims

1. Thermal insulating body of a dispersed insulating material, to which may be added, if desired, mineral fibre wool and opacifier, and which is consolidated with a binder, characterized in that binder is provided, uniformly distributed in a first stage mix with a dispersant, finely dispersed in the insulating material, the edges and corners of the insulating material being cross-linked by a heat treatment in the presence of the binder.

2. Body according to claim 1, characterized in that organic and/or inorganic substances are used as a binder.

3. Body according to claim 2, characterized in that low melting point glasses, glass solders, phosphates, sulphates, carbonates, hydroxides or oxides of alkali or alkaline earth metals, sodium silicates, borates, borax or sodium perborate are used as inorganic binders.

4. Body according to claim 3, characterized in that soda or sodium sulphate is used as an inorganic binder.

5. Body according to claim 2, characterized in that thermosetting resins such as phenol formaldehyde resins, urea formaldehyde resins, polyvinylchloride, copolymers of vinyl chloride and vinyl acetate or silicone are used as organic binders.

6. Body according to claim 5, characterized in that formaldehyde resin or methyl silicone resin is used as an organic binder.

7. Body according to claim 1, characterized in that polytetrafluoroethylene, hydrophobic and/or pyrogenic silica is used as a dispersant.

8. Body according to one or more of the preceding claims 1 to 7, characterized in that the particle size of the binder, dispersant and/or insulating material particle is less than 1 micron.

9. Body according to one or more of the preceding claims 1 to 7, characterized in that the particle size of the opacifier particles is 2—3 microns.

10. Body according to one or more of the preceding claims 1 to 9, characterized in that the proportions of binder to insulating material lie in the range 2 : 98—30 : 70, preferably 10 : 90.

11. Body according to one or more of the preceding claims 1—9, characterized in that the amount of dispersant in the binder lies in the range 0.5 : 20, preferably 5 – 10% by weight.

12. Process for making a thermal insulating body according to claim 1, characterized in that a binder is mixed with a dispersant, the thus-obtained first-stage mix is blended with the insulating material and if desired the mineral fibre wool and the opacifier and the resulting mix compressed and then cured.

13. Process according to claim 12, characterized in that soda or soium sulphate is used as a binder.

14. Process according to claim 12 or 13, characterized in that hydrophobic silica is used as a dispersant.

15. Process according to one of the preceding claims 12 to 14, characterized in that the amount of dispersant in the binder is 0.5 – 20, preferably 5 – 10% by weight.

16. Process according to one or more of the preceding claims 12 – 15, characterized in that the particle size of the dispersant, binder and/or insulating material particles is less than 1 micron.

17. Process according to one or more of the preceding claims 12 – 15, characterized in that the particle size of the opacifier is 2 – 3 microns.

18. Process according to one or more of the preceding claims 12 – 17, characterized in that the proportion of binder/insulating material lie in a range from 2 : 98 – 30 : 70, preferably 10 : 90.

19. Process according to one or more of the preceding claims 12 – 18, characterized in that the ompressed mix is cured in an oven at a temperature of 500 – 700° C.

20. Process according to one of the preceding claims 12 to 18, characterized in that the compressed mix is cured in a high frequency or microwave oven.

21. Process according to one or more of the preceding claims 12 to 20, characterized in that an upper and lower outer binder-containing layer are offered to a core layer comprising insulating material and, if desired, mineral fibre wool and opacifier, these layers being bonded by pressure and finally undergoing a heat treatment.

22. Process according to one or more of the preceding claims 12 to 21, characterized in that finely milled mineral fibres having cured binder are used.

**Revendications**

1. Corps calorifuge en une matière isolante en forme de particules, à laquelle de la laine de fibres minérales et un opacifiant ont éventuellement été ajoutés et qui est durci à l'aide d'un liant, corps caractérisé en ce que le liant, uniformément réparti avec un agent de dispersion dans un mélange préliminaire, est présent sous forme finement dispersée dans la matière isolante, les faces, arêtes et bords de la matière isolante étant réticulés du fait d'un traitement de chauffage en présence du liant.

2. Corps selon la revendication 1, caractérisé en ce qu'on utilise comme liant des substances organiques et, éventuellement ou en variante, minérales.

3. Corps selon la revendication 2, caractérisé en ce qu'on utilise comme liant minéral des verres à bas point de fusion; des verres pour soudures, des phosphates, sulfates, carbonates, hydroxydes ou oxydes des métaux alcalins ou alcalino-terreux; des silicates de sodium, des borates, du borax ou du perborate de sodium.

4. Corps selon la revendication 3, caractérisé en ce qu'on utilise comme liant minéral du carbonate de sodium ou du sulfate de sodium.

5. Corps selon la revendication 2, caractérisé en ce qu'on utilise comme liant organique des résines durcissables par voie thermique, comme des résines phénol/formaldéhyde, des résines urée/formaldéhyde, du chlorure de polyvinyle, des copolymères du chlorure de vinyle et de l'acétate de vinyle ou des silicones.

6. Corps selon la revendication 5, caractérisé en ce qu'on utilise comme liant organique une résine de formaldéhyde ou une résine de méthyl-silicone.

7. Corps selon la revendication 1, caractérisé en ce qu'on utilise comme agent de dispersion du polytétrafluor éthylène, de l'acide silicique (ou silice) rendu hydrophobe et, éventuellement ou en variante, pyrogène.

8. Corps selon une ou plusieurs des revendications 1 à 7 précédentes, caractérisé en ce que la grosseur des grains des particules du liant, des particules de l'agent de dispersion et, éventuellement ou en variante, des particules de l'agent d'isolement se situe au dessous de 1 micromètre.

9. Corps selon une ou plusieurs des revendications 1 à 7 précédentes, caractérisé en ce que la grosseur des grains des particules de l'opacifiant se situe entre 2 et 3 micromètres.

10. Corps selon une ou plusieurs des revendications 1 à 9 précédentes, caractérisé en ce que le rapport entre le liant et la matière isolante se situe entre 2 : 98 et 30 : 70, notamment à 10 : 90.

11. Corps selon une ou plusieurs des revendications 1 à 9 précédentes, caractérisé en ce que la proportion de l'agent de dispersion dans le liant se situe entre 0,5 et 20 et en particulier entre 5 et 10% en poids.

12. Procédé pour produire un corps calorifuge selon la revendication 1, caractérisé en ce qu'on mélange un liant avec un agent de dispersion, on mélange le mélange préliminaire ainsi obtenu avec la matière isolante et éventuellement avec de la laine de fibres minérales ainsi qu'avec l'opacifiant; et l'on comprime le mélange ainsi obtenu que l'on fait ensuite durcir.

13. Procédé selon la revendication 12, caractérisé en ce qu'on utilise comme liant du carbonate de sodium ou du sulfate de sodium.

14. Procédé selon la revendication 12 ou 13, caractérisé en ce qu'on utilise comme agent de dispersion de la silice rendue hydrophobe.

15. Procédé selon l'une quelconque des revendications 12 à 14 précédentes, caractérisé en ce que la proportion de l'agent de dispersion dans le liant se situe entre 0,5 et 20, avantageusement entre 5 et 10% en poids.

16. Procédé selon une ou plusieurs des revendications 12 à 15 précédentes, caractérisé en ce que la grosseur des grains des particules de l'agent de dispersion, des particules du liant et/ou des particules de l'agent isolant se situe au dessous de 1 micromètre.

17. Procédé selon une ou plusieurs des revendications 12 à 15 précédentes, caractérisé en ce que la grosseur des grains des particules de l'opacifiant se situe entre 2 et 3 micromètres.

18. Procédé selon une ou plusieurs des revendications 12 à 17 précédentes, caractérisé en ce que le rapport entre le liant et la matière isolante se situe entre 2 : 98 et 30 : 70 et avantageusement à 10 : 90.

19. Procédé selon une ou plusieurs des revendication 12 à 18 précédentes, caractérisé en ce que l'on fait durcir dans un four, à des températures de 500 à 700°C, le mélange comprimé.

20. Procédé selon l'une quelconque des revendications 12 à 18 précédentes, caractérisé en ce qu'on fait durcir dans un four à haute fréquence ou à micro-ondes le mélange comprimé.

21. Procédé selon une ou plusieurs des revendications 12 à 20 précédentes, caractérisé en ce qu'on applique sur une couche entrale, consistant en la matière isolante et éventuellement de la laine de fibres de verre et de l'opacifiant, une couche de couverture supérieure et inférieure contenant chaque fois du liant, on consolide ces couches par compression et l'on soumet ensuite le tout à un traitement de chauffage.

22. Procédé selon une ou plusieurs des revendications 12 à 21 précédentes, caractérisé en ce qu'on utilise des fibres minérales finement broyées et pourvues d'un liant durci.

Fig. 1

Fig. 2